# EUROPÄISCHE PATENTANMELDUNG

(11) **EP 1 547 834 A1**
(43) Veröffentlichungstag der Anmeldung: **29.06.2005**
(21) Anmeldenummer: 04030357.0
(22) Anmeldetag: 21.12.2004
(51) Int. Cl.: B60H 3/02

(54) **Luftkonditionierungssystem für ein Fahrzeug**

(30) Priorität: 22.12.2003 DE 10360459
(71) Anmelder: J. Eberspächer GmbH & Co. KG, 73730 Esslingen (DE)
(72) Erfinder: Eberspach, Günter, 72649 Wolfschlugen (DE)
(74) Vertreter: Ruttensperger, Bernhard, Dipl.-Phys.

(57) **Zusammenfassung**

Ein Konditionierungssystem für ein Fahrzeug zum Konditionieren der in einen Fahrzeuginnenraum einzuleitenden Luft, umfasst eine von der Luft (L) durchströmbare Trockeneinrichtung (14), durch welche der Luft (L) Feuchtigkeit entziehbar ist.

## Beschreibung

Die vorliegende Erfindung betrifft ein Konditionierungssystem für ein Fahrzeug, mit welchem Konditionierungssystem die in einen Fahrzeuginnenraum einzuleitende Luft konditioniert werden kann.

Beim Aufbau derartiger Konditionierungssysteme ist im Allgemeinen zu berücksichtigen, dass an diese verschiedene Anforderungen gestellt werden. So soll zum einen die in den Fahrzeuginnenraum einzuleitende Luft einen Zustand aufweisen, der von Fahrzeuginsassen als angenehm empfunden wird. Bei vergleichsweise hohen Umgebungstemperaturen soll diese Luft also möglichst kühl sein, d.h. beispielsweise durch ein Klimasystem gekühlt worden sein. Weiterhin soll vor allem auch bei relativ hoher Luftfeuchtigkeit die Luft möglichst in einem getrockneten bzw. feuchtigkeitsreduzierten Zustand in den Fahrzeuginnenraum eingeleitet werden, um somit die Verdunstung der auf der Haut der Fahrzeuginsassen sich ansammelnden Feuchtigkeit zu unterstützen. Gleichzeitig sollen derartige Systeme aber auch mit möglichst geringem energetischen Aufwand betrieben werden, was insbesondere dann eine elementare Anforderung ist, wenn beispielsweise die Standkonditionierung bzw. Standklimatisierung ermöglicht werden soll, also die Beeinflussung der in den Fahrzeuginnenraum einzuleitenden Luft in einem Zustand, in dem ein beispielsweise als Hauptenergiequelle dienendes Antriebsaggregat des Fahrzeugs nicht betrieben ist und insofern beispielsweise der Kompressor einer Klimaanlage durch Hilfsenergiequellen, wie z.B. eine Batterie oder eine Brennstoffzelle, zu betreiben ist.

Es ist die Aufgabe der vorliegenen Erfindung, ein derartiges Konditionierungssystem für ein Fahrzeug vorzuschlagen, mit welchem bei einfachem Aufbau eine effiziente Konditionierung der in einen Fahrzeuginnenraum einzuleitenden Luft erlangt werden kann.

Erfindungsgemäß wird diese Aufgabe gelöst durch ein Konditionierungssystem für ein Fahrzeug zum Konditionieren der in einen Fahrzeuginnenraum einzuleitenden Luft, umfassend eine von der Luft durchströmbare Trockeneinrichtung, durch welche der Luft Feuchtigkeit entziehbar ist.

Durch die erfindungsgemäß vorzusehende Trockeneinrichtung, durch welche der in den Innenraum einzuleitenden Luft Feuchtigkeit entzogen werden kann, können verschiedene Effekte erlangt werden. Ist einer derartigen Einrichtung beispielsweise ein Verdampfer einer Klimaanlage nachgeschaltet, in welchem Verdampfer dann die Luft vor Einleitung in den Fahrzeuginnenraum gekühlt wird, so kann durch das dem Verdampfer vorgeschaltete Trocknen der Luft der Verdampfer effizienter arbeiten, da es nicht erforderlich ist, den in der Luft transportierten Feuchtigkeitsanteil mitzukühlen. Das heißt, bei gleicher Leistung des Klimatisierungssystems können niedrigere Lufttemperaturen erlangt werden bzw. bei vorgegebener Lufttemperatur kann im Vergleich zu herkömmlichen Systemen ohne dem vorherigen Trocknen der Luft das Klimatisierungssystem mit geringerer Leistung betrieben werden bzw. grundsätzlich für geringere Leistungsfähigkeit ausgelegt werden. Bei vergleichsweise niedriger Außentemperatur aber hoher Luftfeuchtigkeit kann durch die erfindungsgemäß vorzusehende Trockeneinrichtung der Luft Feuchtigkeit entzogen werden, ohne dass dazu beispielsweise ein Klimatisierungssystem in Betrieb gesetzt werden muss, das ebenfalls dazu genutzt werden kann, Feuchtigkeit aus der in den Fahrzeuginnenraum einzuleitenden Luft abzuziehen, was jedoch möglicherweise das nachherige Wiedererwärmen der Luft vor Einleiten derselben in den Fahrzeuginnenraum erforderlich macht. Weiter hat insbesondere die Kombination der Trockeneinrichtung mit einem Klimaanlagenverdampfer den Vorteil, dass auch im normalen Klimatisierungsbetrieb dem Verdampfer bereits feuchtigkeitsentreicherte Luft zugeführt wird, so dass die im Bereich des Verdampfers sich ansammelnde Feuchtigkeit ebenfalls reduziert ist und die mit einer Feuchtigkeitsansammlung im Bereich des Verdampfers sich ergebenden Probleme, wie z.B. unangenehme Gerüche, deutlich gemindert werden können.

Bei einer besonders bevorzugten Ausgestaltungsform des erfindungsgemäßen Systems kann vorgesehen sein, dass die Trockeneinrichtung eine von der in den Innenraum einzuleitenden Luft durchströmbare Zeolith-Anordnung umfasst. Das in einer derart dicken Zeolith-Anordnung vorgesehene Zeolith-Material hat eine stark hygroskopische Eigenschaft und entzieht der dieses Material umströmenden bzw. durchströmenden Luft Feuchtigkeit. Die Feuchtigkeit sammelt sich in dem Zeolith-Material an, und die Luft strömt in einem feuchtigkeitsreduzierten Zustand dann weiter in Richtung Fahrzeuginnenraum. Da für diesen Trockenvorgang keine Energie aufgewandt werden muss, eignet sich ein derartiges System besonders für die Standkonditionierung eines Fahrzeugs, also die Konditionierung in einem Zustand, in dem die erforderliche Energie beispielsweise durch eine Batterie oder einen sonstigen Energiespeicher oder ein Brennstoffzellensystem bereitgestellt werden müßte.

Die Zeolith-Anordnung kann beispielsweise derart aufgebaut sein, dass sie eine Mehrzahl von Zeolith-Einheiten umfasst, von welchen dann vorzugsweise einzelne oder mehrere wahlweise zur Durchströmung durch die in den Fahrzeuginnenraum einzuleitende Luft freigebbar bzw. gegen Durchströmung blockierbar sind. Eine derartige Ausgestaltungsform ist besonders daher vorteilhaft, da das Vermögen, der Luft Feuchtigkeit zu entziehen, durch die Aufnahme der Feuchtigkeit im Zeolith-Material abnimmt. Ist das in einer der Einheiten enthaltene Zeolith-Material dann gesättigt bzw. in einem Zustand, in dem eine effiziente Lufttrocknung nicht mehr möglich ist, kann diese aus dem Strömungsweg herausgenommen werden und dafür eine andere Zeolith-Einheit freigegeben werden oder ggf. mehrere Einheiten freigegeben werden, um weiterhin eine effiziente Trocknung der Luft sicherstellen zu können.

Wie vorangehend ausgeführt, nimmt beim Durchströmen mit Feuchtigkeit transportierender Luft das Zeolith-Material der Zeolith-Anordnung Feuchtigkeit auf. Um nach erfolgter Feuchtigkeitsaufnahme dafür sorgen zu können, dass diese Feuchtigkeit aus dem Zeolith-Material ausgetrieben wird und dieses somit erneut zum Trocknen von Luft eingesetzt werden kann, wird vorgeschlagen, dass der Zeolith-Anordnung wenigstens eine Wärmequelle zum Erwärmen derselben zugeordnet ist. Als derartige Wärmequellen für die Zeolith-Anordnung kommen verschiedene Systembereiche in einem Fahrzeug in Frage. So kann beispielsweise ein brennstoffbetriebener Brenner dazu genutzt werden, die zum Trocknen des Zeolith-Materials erforderliche Wärme bereitzustellen. Ein derartiger Brenner könnte beispielsweise ein ansonsten als Standheizung oder als Zuheizer eingesetzter Brenner sein. Auch die in einem Abgasführungssystem einer Brennkraftmaschine in den Abgasen transportierte Wärme kann unter Einsatz entsprechender Wärmetauscheranordnungen dazu genutzt werden, das Zeolith-Material zu trocknen. Auch eine Brennstoffzelle erzeugt im Betrieb Wärme, die über ein Wärmeträgermedium selbstverständlich auch auf das Zeolith-Material der Zeolith-Anordnung übertragen werden kann. Insbesondere beim Vorhandensein einer Brennstoffzelle kann der vorangehend angesprochene Brenner als Brennstoff auch das die Brennstoffzelle verlassende und noch Restwasserstoff enthaltende Gas als Brennstoff nutzen, um somit einen sehr effizienten Betrieb des Gesamtsystems realisieren zu können. Selbstverständlich kann die Wärmequelle auch einen elektrisch betreibbaren Heizer umfassen, wobei dieser elektrisch betreibbare Heizer dann als Energiequelle beispielsweise wieder die bereits angesprochene Brennstoffzelle nutzen kann. Es ist selbstverständlich, dass in verschiedenen Betriebsphasen eines Fahrzeugs nur die dann jeweils verfügbaren Wärmequellen genutzt werden können, so kann selbstverständlich im Stillstand des Fahrzeugs die Brennkraftmaschine bzw. das Abgasführungssystem derselben keinen Beitrag zur Erwärmung des Zeolith-Materials liefern.

Wie bereits vorangehend angesprochen, kann gemäß einem vorteilhaften Aspekt der vorliegenden Erfindung die Trockeneinrichtung kombiniert sein mit einem im Luftströmungsweg dieser nachgeschalteten Verdampfer einer Klimaanlage. Auf diese Art und Weise kann die Luft bereits in einem getrockneten bzw. feuchtigkeitsentreicherten Zustand in den Verdampfer gelangen, so dass weniger Energie erforderlich ist, um die Temperatur der Luft auf ein gewünschtes Niveau zu senken.

Da beim Durchströmen des Zeolith-Materials und dem dabei auftretenden Abgeben von Feuchtigkeit in das Zeolith-Material die in den Innenraum einzuleitende Luft erwärmt wird, kann gemäß einem weiteren vorteilhaften Aspekt der Erfindung vorgesehen sein, dass zwischen der Trockeneinrichtung und dem Verdampfer eine Wärmetauscheranordnung zur Aufnahme von in der in den Innenraum einzuleitenden Luft transportierter Wärme vorgesehen ist.

Die vorliegende Erfindung wird nachfolgend mit Bezug auf die beiliegenden Zeichnungen anhand bevorzugter Ausgestaltungsformen beschrieben. Es zeigt:
- Fig. 1: eine blockbildartige Darstellung eines erfindungsgemäßen Konditionierungssystems gemäß einer ersten Ausgestaltungsvariante;
- Fig. 2: eine abgewandelte Ausgestaltungsform des erfindungsgemäßen Systems.

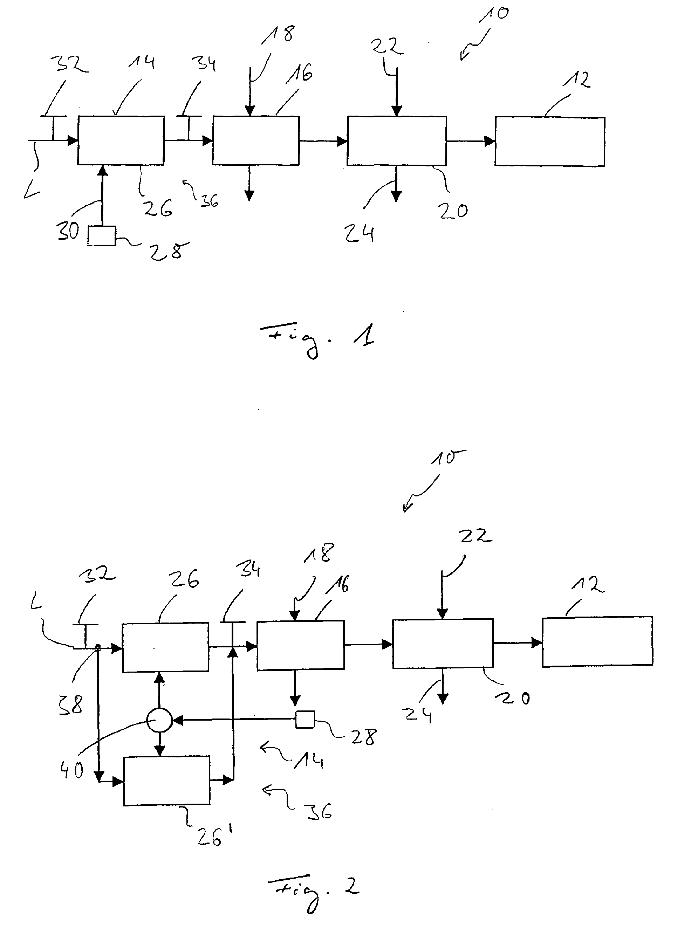

Das in Fig. 1 schematisch und mit seinen wesentlichen Systembereichen dargestellte Konditionierungssystem 10 umfasst in dem hier von links nach rechts führenden Luftströmungsweg der in einen Fahrzeuginnenraum 12 einzuleitenden Luft zunächst im stromaufwärtigen Bereich eine allgemein mit 14 bezeichnete Trockeneinrichtung. Die in den Fahrzeuginnenraum 12 einzuleitende Luft L durchströmt diese Trockeneinrichtung 14 und tritt danach in einen Wärmetauscher 16 ein. Dieser Wärmetauscher 16 entzieht der in den Innenraum 12 einzuleitenden Luft Wärme und überträgt diese auf ein Kühlmedium 18, das beispielsweise durch Umgebungsluft oder ein sonstiges Kühlmittel repräsentiert sein kann. Hier kann insbesondere auch der in Zuordnung zu einem Fahrzeugantriebsaggregat vorgesehene Kühlmittelkreislauf genutzt werden, um der in den Fahrzeuginnenraum 12 einzuleitenden Luft nach Durchströmen der Trockeneinrichtung 14 Wärme zu entziehen und somit bereits eine Vorkonditionierung für die Brennkraftmaschine zu erlangen.

Nach dem Durchströmen des Wärmetauschers 16 gelangt die Luft L in einen Verdampfer 20 eines nicht weiter dargestellten Klimatisierungssystems. Diesem Verdampfer 20 wird zum Kühlen der Luft zunächst flüssiges Kältemittel 22 zugeführt, wird darin verdampft, um der Luft die zum Verdampfen erforderliche Energie zu entziehen und wird als gasförmiges Kältemittel 24 dann unter der Förderwirkung eines nicht weiter dargestellten Kompressors abgegeben und in Richtung Kondensator geleitet. Die Luft L gelangt dann in einem Zustand, in welchem ihr zunächst in der Trockeneinrichtung 14 Feuchtigkeit entzogen worden ist und dann im Wärmetauscher 16 und im Verdampfer 20 Wärme und ggf. noch einmal Feuchtigkeit entzogen worden ist, in einem getrockneten, gekühlten Zustand in den Fahrzeuginnenraum 12.

Die in der Fig. 1 dargestellte Trockeneinrichtung 14 umfasst gemäß einem besonders vorteilhaften Aspekt der vorliegenden Erfindung eine Zeolith-Einheit 26. Diese Zeolith-Einheit 26 enthält Zeolith-Material, also ein im Allgemeinen kristallisiertes Mineralmaterial. Derartiges Zeolith-Material weist die Eigenschaft auf, dass es einem dieses durchströmenden gasförmigen Medium, wie z. B. der Luft L, Feuchtigkeit, d.h. Wasser, entzieht und dieses in seiner kristallinen Struktur aufnimmt. Da bei diesem Vorgang im Zeolith-Material Wärme entsteht, erwärmt sich die Luft beim Durchströmen dieser Zeolith-Einheit 26, so dass es vorteilhaft ist, vor dem Einleiten in den Verdampfer 20 die Luft im Wärmetauscher 16 zu kühlen. Der Vorgang des Trocknens der Luft in der Zeolith-Einheit 26 erfordert in dem Fahrzeug, das ein derartiges System enthält, nicht die Bereitstellung irgendwelcher Energiequellen. Die Folge davon ist, dass das Trocknen der in den Fahrzeuginnenraum 12 einzuleitenden Luft L ohne dem gleichzeitigen Bereitstellen von Energie erfolgen kann, was wiederum die besondere Eignung zur Standkonditionierung mit sich bringt. Vor allem dann, wenn ein derartiges System mit einem Verdampfer 20 bzw. einem Klimatisierungssystem für das Fahrzeug gekoppelt ist, resultiert daraus, dass in diesem Klimatisierungssystem zum Abkühlen der nun bereits getrockneten bzw. feuchtigkeitsreduzierten Luft L weniger Energie bereitgestellt werden muss. Das heißt, das Klimatisierungssystem kann mit weniger Energie betrieben werden, was ebenfalls im Falle der Standklimatisierung von besonderem Vorteil ist, bzw. kann bereits schwächer dimensioniert werden und infolge dessen einen geringeren Energieverbrauch aufweisen. Selbstverständlich kann durch das vorhergehende Trocken der in den Fahrzeuginnenraum 12 eingeleiteten Luft grundsätzlich auch das Kühlvermögen eines Klimatisierungssystems gesteigert werden, da bei gleichem Energieaufwand nicht zusätzlich auch noch die in der Luft ansonsten enthaltene Feuchtigkeit mitgekühlt werden muss.

Um dafür zu sorgen, dass auch nach durchgeführtem Trockenvorgang in einer Standklimatisierungsphase oder auch ggf. während der Fahrt das Zeolith-Material der Zeolith-Einheit 26 wiederholt in einen Zustand gebracht werden kann, in welchem dieses zur Feuchtigkeitsaufnahme bereit ist, kann der Trockeneinrichtung 14 eine Wärmequelle 28 zugeordnet sein. Diese Wärmequelle 28 kann dazu genutzt werden, ein Wärmeträgermedium 30 zu erwärmen, das der Trockeneinrichtung 14 zugeführt wird und diese erwärmt. Durch die Erwärmung des Zeolith-Materials wird die Feuchtigkeit aus diesem ausgetrieben, d.h. das Zeolith-Material wird getrocknet und wieder in einen Zustand zur erneuten Feuchtigkeitsaufnahme gebracht. Um nach dem Trocknen des Zeolith-Materials dafür zu sorgen, dass dieses nicht in einem Zustand, in dem dessen Betrieb zum Trocknen der Luft L nicht erforderlich ist, bereits wieder Feuchtigkeit aufnimmt, können in Strömungsrichtung vor und hinter der Zeolith-Einheit 26 Absperrorgane 32, 34 vorgesehen sein. Auf diese Art und Weise kann das getrocknete Zeolith-Material vom Luftstrom vollständig abgekoppelt werden, so dass es auch keine Feuchtigkeit aufnehmen kann. Es ist selbstverständlich, dass dann für die Luft L ein anderer, die Zeolith-Einheit 26 umgebender Strömungsweg bereitgestellt werden muss. Erst dann, wenn die Zeolith-Einheit 26 wieder zum Trocknen der in den Fahrzeuginnenraum 12 einzuleitenden Luft betrieben werden soll, werden die Absperrorgane 32, 34 wieder geöffnet und der Luftströmungsweg durch die Zeolith-Einheit 26 wieder freigegeben.

Die Wärmequelle 28 kann von verschiedenster Art sein. So kann beispielsweise ein brennstoffbetriebener Brenner dazu genutzt werden, die erforderliche Wärmeenergie bereitzustellen. Dieser brennstoffbetriebene Brenner, der beispielsweise ansonsten als Standheizung oder als Zuheizer arbeiten kann, kann mit einem flüssigen Brennstoff gespeist werden, kann beispielsweise aber auch dann, wenn in einem derartigen Fahrzeug eine Brennstoffzelle vorgesehen ist, das von dieser abgegebene und noch Restwasserstoff enthaltende Gas zusammen mit Luftsauerstoff verbrennen und dabei Wärme erzeugen und auf das Wärmeträgermedium 30 übertragen. Auch kann die Brennstoffzelle selbst als derartige Wärmequelle dienen, da im Stromerzeugungsbetrieb die Brennstoffzelle, je nach Bauart, mehr oder weniger stark erwärmt wird und insofern die dort anfallende Wärme auch zum Trocknen der Zeolith-Einheit 26 genutzt werden kann. Weiter kann auch das Abgasführungssystem einer Brennkraftmaschine als Wärmequelle genutzt werden. Dies ist besonders dann von Vorteil, wenn beispielsweise in einer Standklimatisierungsphase das Fahrzeug vorkonditioniert worden ist und nach Inbetriebnahme dann durch die Brennkraftmaschine Wärme bereitgestellt wird, die zum Trocknen des Zeolith-Materials eingesetzt werden kann. Grundsätzlich ist natürlich auch das Bereitstellen eines elektrischen Heizers als Wärmequelle möglich, so dass kein weiterer Wärmeträgermediumkreislauf erforderlich ist, sondern beispielsweise unmittelbar an der Zeolith-Einheit 26 ein derartiger elektrischer Heizer vorgesehen werden kann. Dieser elektrische Heizer wiederum kann insbesondere im Standbetriebsmodus von einer Hilfsenergiequelle, wie z.B. einer Brennstoffzelle, mit elektrischer Energie gespeist werden.

In Fig. 2 ist eine alternative Ausgestaltungsvariante des erfindungsgemäßen Fahrzeugkonditionierungssystems 10 gezeigt. Man erkennt hier, dass die Trockeneinrichtung 14 eine zwei Zeolith-Einheiten 26, 26' umfassende Zeolith-Anordnung 36 umfasst. Im dargestellten Beispiel sind die beiden Zeolith-Einheiten 26, 26' zueinander parallel geschaltet und durch eine Umschalt- bzw. Ventileinheit 38 ist es möglich, die in den Fahrzeuginnenraum einzuleitende Luft L wahlweise über eine der beiden Zeolith-Einheiten 26, 26' oder aber auch über beide strömen zu lassen. Der Vorteil dieser wahlweisen Durchströmung der Zeolith-Einheiten 26, 26' ist, dass während eine dieser Einheiten zum Trocknen der in den Fahrzeuginnenraum einzuleitenden Luft aktiv ist, die andere durch Wärmezufuhr selbst getrocknet werden kann und somit ein zeitlich praktisch unbegrenzter Betrieb möglich wird. Auch hier kann wieder eine Wärmequelle 28 vorgesehen sein, wobei nunmehr über ein Umschaltorgan 40 die von dieser bereitgestellte Wärme bzw. das erwärmte Wärmeträgermedium wahlweise zu einer der beiden Zeolith-Einheiten 26, 26' oder aber auch zu beiden geleitet werden kann. Bei Ausgestaltung der Wärmequelle als elektrischer Heizer ist es beispielsweise möglich, in Zuordnung zu jeder der Zeolith-Einheiten 26 einen separaten und auch separat ansteuerbaren Heizer bereitzustellen. In Zuordnung zu den beiden Zeolith-Einheiten 26, 26' sind wieder die Absperrorgane 32, 34 vorhanden, um nach Trocknen dieser Zeolith-Einheiten 26, 26' dafür zu sorgen, dass sie in einem trockenen Zustand verbleiben. Selbstverständlich können dafür in Zuordnung zu jeder der Zeolith-Einheiten 26, 26' separate Absperrorgane 32, 34 vorgesehen sein, so dass, wie beschrieben, eine zum Trocknen genutzt werden kann, während die andere gerade selbst getrocknet wird oder in einem trockenen Zustand gehalten wird.

Durch die vorliegende Erfindung ist ein Konditionierungssystem vorgesehen, das in einfacher und effizienter Weise dazu genutzt werden kann, die in den Fahrzeuginnenraum einzuleitende Luft zu trocknen. Dies hat einerseits den vorteilhaften Effekt, dass bereits durch das Einleiten getrockneter Luft für die Fahrzeuginsassen ein erhöhter Komfort bereitgestellt werden kann, andererseits ermöglicht das Trocknen der in den Fahrzeuginnenraum einzuleitenden Luft bei Bereitstellung eines Klimatisierungssystems einen effizienteren Betrieb desselben.

Abschließend sei darauf hingewiesen, dass als Zeolith-Material bei dem erfindungsgemäßen System sowohl synthetische Zeolithe als auch natürliche Zeolithe zum Einsatz gelangen können. Das Zeolith-Material kann in der bzw. den Zeolith-Einheiten in pulverförmiger Konfiguration oder in grobkörniger Struktur bereitgehalten werden. Auch ist es möglich, das Zeolith-Material in wabenartiger und somit effizient durchströmbarer Form bereitzustellen, wobei hier nur die Oberfläche eines Substratmaterials mit Zeolith-Material beschichtet sein kann bzw. auch der ganze Wabenkörper oder sonstwie geformte und umströmbare Körper aus Zeolith-Material aufgebaut sein können.

## Patentansprüche

1. Konditionierungssystem für ein Fahrzeug zum Konditionieren der in einen Fahrzeuginnenraum einzuleitenden Luft, umfassend eine von der Luft (L) durchströmbare Trockeneinrichtung (14), durch welche der Luft (L) Feuchtigkeit entziehbar ist.

2. Konditionierungssystem nach Anspruch 1,
**dadurch gekennzeichnet, dass** die Trockeneinrichtung (14) eine von der in den Fahrzeuginnenraum (12) einzuleitenden Luft (L) durchströmbare Zeolith-Anordnung (36) umfasst.

3. Konditionierungssystem nach Anspruch 2,
**dadurch gekennzeichnet, dass** die Zeolith-Anordnung (36) eine Mehrzahl von Zeolith-Einheiten (26, 26') umfasst.

4. Konditionierungssystem nach Anspruch 3,
**dadurch gekennzeichnet, dass** von der Mehrzahl von Zeolith-Einheiten (26, 26') einzelne oder mehrere wahlweise zur Durchströmung durch die in den Fahrzeuginnenraum (12) einzuleitende Luft (L) freigebbar beziehungsweise gegen Durchströmung blockierbar sind.

5. Konditionierungssystem nach einem der Ansprüche 2 bis 4,
**dadurch gekennzeichnet, dass** der Zeolith-Anordnung (36) wenigstens eine Wärmequelle (28) zum Erwärmen derselben zugeordnet ist.

6. Konditionierungssystem nach Anspruch 5,
**dadurch gekennzeichnet, dass** die Wärmequelle (28) umfasst:
- einen brennstoffbetriebenen Brenner oder/und
- ein Abgasführungssystem einer Brennkraftmaschine oder/und
- eine Brennstoffzelle oder/und
- einen elektrisch betreibbaren Heizer.

7. Konditionierungssystem nach einem der Ansprüche 1 bis 6,
**dadurch gekennzeichnet, dass** in Luftströmungsrichtung der Trockeneinrichtung nachgeschaltet ein Verdampfer (20) einer Klimaanlage vorgesehen ist.

8. Konditionierungssystem nach Anspruch 7,
**dadurch gekennzeichnet, dass** zwischen der Trockeneinrichtung (14) und dem Verdampfer (20) eine Wärmetauscheranordnung (16) zur Aufnahme von in der in den Fahrzeuginnenraum (12) einzuleitenden Luft (L) transportierter Wärme vorgesehen ist.
